# EUROPEAN PATENT APPLICATION

(11) **EP 2 194 655 A1**
(43) Date of publication of application: **09.06.2010**
(21) Application number: 08368020.7
(22) Date of filing: 05.12.2008
(51) Int. Cl.: H04B 1/707

(54) **Variable path detection length for efficient paging detection procedure**

(71) Applicant: ST Wireless SA, 1228 Genève (CH)
(72) Inventor: Tomatis, Fabrizio, 06220 Vallauris (FR); Demaj, Pierre, 06200 Nice (FR); Alliot, Eric, 06800 Cagnes sur Mer (FR)
(74) Representative: Schuffenecker, Thierry

(57) **Abstract**

The present invention relates to a method to be performed in the context of multipath detection. The method comprises ascertaining a channel-condition indicator indicative of a current channel condition on a control channel used for receiving a pilot-symbol signal, setting a number of pilot symbols to be used in performing a multipath-detection in dependence on the ascertained channel-condition indicator; ascertaining a correlation measure between a section of the pilot-symbol signal comprising the set number of pilot-symbols and an expected pilot-symbol signal comprising the set number of pilot symbols; and performing multipath detection using the ascertained correlation measure. Setting the number of pilot symbols to be used by a multipath-detector unit in performing the multipath-detection in dependence on the ascertained channel-condition indicator allows saving under certain channel conditions, e.g., weak signal fading.

## Description

### FIELD OF THE INVENTION

The present invention relates to the field of wireless telecommunication. More particularly, it relates to the field of wireless cellular communication.

### BACKGROUND OF THE INVENTION

Radio-frequency (RF) signals communicated between a Base Transceiver Station (BTS), and an attached RF communication device are subject to frequency-selective fading, which is caused by multipath propagation. In the context of a third generation (3G) of cellular communication standard a BTS is also referred to as Node B. The attached RF communication device is also referred to as User Equipment or UE.

Multipath propagation occurs for instance when a transmitted signal is reflected from objects in the transmission path, such that multiple signal copies arrive at the receiver at different times, with different phases, and different signal strengths.

To improve signal detection at the receiving end in this situation, a Rake receiver may be employed. A Rake receiver serves to coherently combine the signal energy received on different multipaths. Using a Rake receiver, a separate correlator receiver, also referred to as "Rake finger" or "finger", can be assigned to each detected multipath. The outputs of the fingers are compensated for delay and phase, and combined into one detected signal.

Correctly identifying a multipath profile thus improves the performance of a UE, since a larger number of compensated multipath signals delivers more total signal energy of the detected signal to the Rake receiver.

The number of fingers used and the delay of each finger in a Rake receiver are allocated on the basis of the operation of a multipath searcher. A multipath searcher is operative to find arrival times of signals received by the Rake receiver via different multipaths. An effective multipath searcher is, therefore, required to identify the delayed versions of the transmitted signal with a low error level. Multipath searchers are in the art also called searcher or path searcher.

A multipath searcher of a UE, for instance for use in a 3G wireless cellular communication standard (also referred to as UMTS), employs pilot symbols broadcast by the Node B of the cell, to which the corresponding UE is attached.

In an Idle mode, which is entered for saving power in absence of ongoing RF communication, the UE monitors only at regular intervals (the so-called DRX cycle), whether it is receiving a call. Each time the UE is active in the DRX cycle, a Paging Information Channel (PICH) is monitored. In case the information received on the PICH is positive, i.e., indicates an incoming call for the UE, this is followed by a monitoring of a Secondary Common Control Physical Channel (SCCPCH) carrying a Paging Channel PCH. This paging procedure is used to signal to UE that there is an incoming call. A multipath detection has to be performed each time the user equipment becomes active in the DRX cycle.

The accuracy of the multipath detection in this regular process is decisive for the performance of the PICH-PCH decoding of the UE in relation to a preset target performance level. Furthermore, the energy spent for this regular process influences the autonomy, i.e. , the battery lifetime, of the UE.

It would be desirable to provide a multipath searcher with an improved efficiency and good performance at the same time.

### SUMMARY OF THE INVENTION

According to an embodiment of a first aspect of the invention a multipath-searcher is provided, which is connectable to an external Rake receiver. The multipath searcher comprises
- a multipath-detector unit, which is configured to perform multipath detection using a number of pilot symbols comprised in a pilot-symbol signal provided by the external Rake receiver, and to ascertain a correlation measure between the received pilot-symbol signal and an expected pilot-symbol signal comprising the number of pilot symbols; and
- a control unit, which is connected with the multipath-detector unit, and which is configured to to set the number of pilot symbols to be used by the multipath-detector unit in performing the multipath-detection in dependence on a current channel condition on a control channel used by the Rake receiver for receiving the pilot-symbol signal.

The multipath searcher of the present invention provides a controllability of the number of pilot symbols to be used in the multipath detection. That means, even though a given number of pilot symbols is provided by a base station in the form of a pilot-symbol signal, the multipath searcher is capable of restricting the multipath detection to the use of a smaller number of pilot symbols, by action of control means formed by the above control unit.

A controllability of the number of pilot symbols used in multipath detection results provides flexibility that can be used to save processing power. For a smaller number of pilot symbols used in multipath detection requires a shorter duration of the multipath detection, compared with a multipath detection using the full number of provided pilot symbols. A shorter duration of the multipath detection in turn requires a lower power consumption by the multipath searcher. Therefore, the multipath searcher of the present invention allows improving, i.e., reducing the power consumption of the multipath detection.

In accordance with embodiments of the first aspect of the present invention, the control unit is configured to set the number of pilot symbols to be used by the multipath-detector unit in dependence on a current channel condition on a control channel used by the Rake receiver for receiving the pilot-symbol signal. Thus, under certain channel conditions, the control unit will set a smaller than the maximum number of pilot symbols for multipath detection. This lowers the power consumption of the multipath searcher, thus reducing its overall power requirements as seen over a longer time period.

The number of pilot symbols used in the multipath detection determines a detection capability of a connectable Rake receiver, in particular for channel conditions with a low signal level. Based on this recognition, the multipath searcher according to the present invention allows implementing an adaptivity that allows using exactly the number of pilot symbols and the amount of power, which is required to achieve a desired or required target decoding performance.

The invention allows improving the autonomy of a battery-powered RF communication device (UE). The performance improvement of the multipath searcher of the present invention is particularly advantageous in an idle mode or during a soft handover combining process.

In the following, embodiments of the multipath searcher of the first aspect of the invention will be described. The additional features of embodiments can be combined with those of other embodiments to form further embodiments.

In one embodiment the control unit is configured to set the numer of pilot symbols in dependence on a degree of signal fading on the control channel, through which the pilot symbols are transmitted to the external Rake receiver. The multipath searcher of this embodiment is based on the recognition that a higher number of pilot symbols used in the multipath detection also provides an improved robustness to fading. If the number of pilot symbols used in multipath detection were chosen too low, the detection capability of a Rake receiver using the multipath searcher could become lower than desired or required, thus requiring additional processing time and power to decode received signals. On the other hand, it is the recognition of the inventors that certain channel conditions may not require a full number of pilot symbols for the purpose of multipath detection, while still allowing a sufficient detection capability of the Rake receiver, and sufficient robustness to signal fading.

The control unit of one embodiment is configured to he channel-condition distinguish at least two different channel conditions. In particular, if the at least two channel conditions are distinguishable by a measure indicative of signal fading on a control channel, through which the pilot symbols are transmitted to the external Rake receiver, embodiments of the multipath searcher may be configured capable to distinguish between what in the art is also referred static and dynamic channel conditions, and adapt the number of pilot symbols used in multipath detection accordingly. "Static channel conditions" refers to no signal fading or an only weak presence of signal fading. "Dynamic channel conditions" refers to a strong presence of signal fading.
In one such embodiment, the control unit is configured
- to set a first number of pilot symbols to be used in performing the multipath detection under a first channel condition with a stronger presence of signal fading on the control channel, and
- to set a second number of pilot symbols, which second number is smaller in comparison with the first number, the second number of pilot symbols to be used in performing the multipath detection under a second channel condition with a weaker presence of signal fading on the control channel in comparison with the first channel condition.

In this embodiment, processing duration, processing complexity, and power consumption are adapted to the presence of the current channel conditions, like static or dynamic. This sensitivity for the current channel conditions allows reducing the power consumption of the multipath detection process.

Note that more than two channel conditions may be defined, allowing a distinction between and an adaptivity of the multipath detection process to three or more different degrees of signal fading on the control channel.

The detection of a static or dynamic channel may be part of the multipath search process. This could be called a static/dynamic estimation, and a corresponding unit in the multipath searcher may be referred to as a static/dynamic-estimator.

The detection may alternatively be performed in the context of a channel estimation process performed by a channel-estimator unit. The channel-estimator unit may form an integral part of the mulipath searcher, of the Rake receiver, or form an external unit with respect to the multipath searcher or the Rake receiver.

In any instance, such a static/dynamic-estimator or channel-estimator unit, which is suitably connectable or connected to the external Rake receiver, is preferably configured
- to ascertain at least one current value of at least one channel parameter indicative of the channel condition of the control channel (in particular, regarding signal fading),
- to detect, using at least one predefined criterion related to the at least one channel parameter, a presence of one of at least two distinguishable channel conditions; and
- to generate and provide to the control unit a channel-condition indicator carrying information about which of the at least two distinguishable channel condition has been detected.

It should be noted that the channel conditions currently present on the control channel used for transmission of the pilot symbols are typically also indicative of channel conditions used for transmission of other control signals or of user data. In embodiments designed for operation in a 3G cellular telecommunication standard (UMTS), the control channel used for transmission of the pilot symbols is typically the common pilot channel CPICH. It provides a phase reference for other physical channels and allows a channel estimation within a respective cell. The pilot symbols are broadcast within the complete cell.

To obtain a measure of signal fading, the channel-estimator unit is in one embodiment additionally configured
- to repeatedly ascertain the at least one current value of the at least one channel parameter;
- to ascertain, as a measure indicative of signal fading on the control channel, a variance of the channel-parameter values of the at least one channel parameter; and
- to apply a predefined criterion on the variance for distinguishing between at the least two channel conditions, which are distinguishable by a measure indicative of signal fading on the control channel.

The variance is a known statistical parameter, which is readily available as such by calculation. The criterion is suitably related to predefined value ranges of the variance.

However, the distinction between the value ranges need not be strict. In one exemplary embodiment for, the channel-estimator unit is configured
- to use a distinction between two value ranges of the channel parameter, the value ranges having a common overlap interval between an upper and a lower threshold value;
- to generate a first channel-condition indicator signal, if the variance is in the overlap interval and has last entered the overlap range from above the upper threshold value; and
- to generate a second channel-condition indicator signal, if the variance is in the overlap range and has last entered the overlap range from below the lower threshold value.

This way, a hysteresis is introduced into the process. The decision on the number of pilot symbols may thus made in dependence on the recent fading history of the control channel, which is a useful criterion helping to avoid inappropriate settings. This embodiment suitably has a memory for saving the history of the fading measure.

The at least one channel parameter is in different embodiments from the group consisting of
- a Received Signal Code Power on a control channel, which serves for a transmission of pilot symbols,
- a ratio between a detected signal strength and a detected noise strength on the control channel serving for a transmission of pilot symbols, and
- a Received-Signal-Strength Indicator on the control channel serving for a transmission of pilot symbols.

More than one of these parameters may be used in parallels to obtain complementary information on the channel condition. Also, a mathematical combination of more than one of the mentioned parameters may be used to form the channel parameter.

An embodiment of a second aspect of the invention is a Rake receiver that comprises an embodiment of the multipath searcher of the first aspect of the invention.

An embodiment according to a third aspect of the invention is formed by a modem that comprisies a multipath searcher according to one of its embodiments disclosed herein.

In a fourth aspect of the invention, an RF communication device comprises a multipath searcher according to the first aspect of the invention in the form of one of the embodiments disclosed herein.

Advantageously, the multipath searcher, and suitably the RF communication device as a whole, is configured to exchange control signals with an external base transceiver station of a cellular radio access network according to communication protocols of a 3G cellular-telecommunication standard.

The RF communication device suitably further comprises a timing-control unit. The timing-control unit typically serves, inter alia, for controlling the timing of a switching to an idle mode, in which power delivery to the Rake receiver is reduced, and for periodically activating the Rake receiver in the idle mode for monitoring a paging-indicator channel for the presence of a paging-indicator signal directed to the communication device

The capability of the multipath searcher of the first aspect of the invention is exploited in a preferred embodiment of the RF communication device, wherein a timing-control unit of the RF communication device is connected with the the control unit of the multipath searcher, and which is configured to
- activate the Rake receiver at a controllable timing advance with respect to an expected reception time of a paging indicator signal; and to
- set the timing advance in correspondence to the number of pilot symbols to be used by the multipath-detector unit in the multipath-detection algorithm.

A further aspect of the present invention is formed by a method that comprises:
- ascertaining a channel-condition indicator indicative of a current channel condition on a control channel used for receiving a pilot-symbol signal,
- setting a number of pilot symbols to be used in performing a multipath-detection in dependence on the ascertained channel-condition indicator;
- ascertaining a correlation measure between a section of the pilot-symbol signal comprising the set number of pilot-symbols and an expected pilot-symbol signal comprising the set number of pilot symbols; and
- performing multipath detection using the ascertained correlation measure.

The advantages of the method of this aspect of the invention are evident in view of the previous description of the advantages of the multipath searcher of the first aspect of the invention.

The method further comprises in one embodiment:
- setting a timing advance with respect to an expected reception time of a paging indicator signal for activating a Rake receiver, the timing advance having an amount corresponding to the currently set number of pilot symbols to be used in the multipath-detection; and
- activating a Rake receiver at the set timing advance.

Additional embodiments of the method of the fifth aspect of the invention provide additional method features implementing the respective functionality defined by respective additional features of embodiments of the multipath searcher, the modem, the Rake receiver and the RF communication device of the other aspects of the invention.

A sixth aspect of the invention is formed by computer program comprising computer code for controlling a processor to perform a method of the fifth aspect of the invention or one of its embodiments.

Preferred embodiments of the various aspects of the invention are also defined in the dependent claims.

### DETAILED DESCRIPTION OF THE INVENTION

The present invention is further elucidated by the following figures and examples, which are not intended to limit the scope of the invention. The person skilled in the art will understand that various embodiments may be combined.

### BRIEF DESCRIPTION OF THE DRAWINGS

These and other aspects of the invention will be apparent from and elucidated with reference to the embodiment(s) described hereinafter. In the following drawings
Fig. 1 shows a schematic block diagram of a Rake receiver according to an embodiment of the present invention;
Fig. 2 shows a schematic block diagram of a multipath searcher, according to an embodiment of the present invention;
Fig. 3 shows an embodiment of a control unit for use in the multipath searcher of Fig. 2;
Fig. 4 shows a schematic illustration of a timing of different processes performed during a paging procedure, according to the prior art. It also corresponds to the timing of the different processes according to an embodiment of the present invention under dynamic channel conditions;
Fig. 5 shows a schematic illustration corresponding to that of Fig. 1, for the case of static channel conditions, according to an embodiment of the present invention;
Fig. 6 shows an embodiment of a RF communication device according to an embodiment of the invention; and
Fig. 7 shows a flow diagram of an embodiment of a method for use in a multipath search process.

### DETAILED DESCRIPTION OF THE DRAWINGS

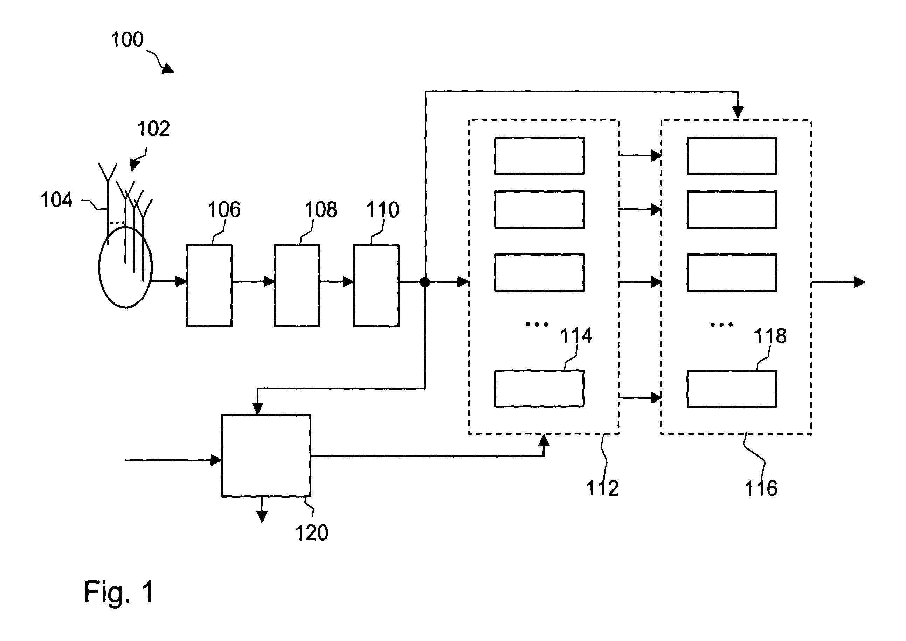

Fig. 1 shows a schematic block diagram of a Rake receiver 100 according to an embodiment of the present invention.

The Rake receiver 100 comprises an antenna section 102, which comprises a plurality of individual antennas 104. The antenna section 102 is connected to a automatic-game-control unit 106, followed by a radio-frequency (RF) front end module, which intern is followed by a analog-to-digital converter (ADC) 110. The output of the ADC 110 is fed to a master Rake unit 112. The master Rake unit 112 is only shown schematically. It comprises a number of Rake fingers 114, which process the incoming signals in parallel. The output of the individual Rake fingers 114 is provided to a slave Rake unit 116, which also comprises a corresponding number of slave Rake fingers 118. The slave Rake unit 116 also receives the output of the ADC 110, which is fed to the slave Rake fingers 118.

The output of the ADC 110 is further provided to a multipath searcher 120.

The multipath searcher provides its output to the master Rake unit 112.

The Rake receiver 100 of Fig. 1 is presented for illustrative purposes. The structure of the Rake receiver may vary. It is described here to show the application context of the multipath searcher 120. However, the multipath searcher may be used with other designs of Rake receivers. For instance, it is not necessary to use a combination of a master Rake unit 112 and a slave Rake unit 116. The single Rake unit may be used in an alternative embodiment. Furthermore, there is no requirement as to the number of Rake fingers or antennas to be used with the Rake receiver. The master and slave Rake units 112 and 116 of Fig. 1 may contain any suitable number of Rake fingers for a particular application context. In operation, the RF signals received via the antennas 104 of the antenna unit 102 are fed to the AGC unit 106, which performs automatic game control in a manner known in the art. RF signals processed by the AGC unit 106 are provided to the RF unit 108, which transforms the RF signals into analog base band signals, which are subsequently transformed into digital base band signals by the ADC unit 110.

In the context of a paging procedure, the multipath searcher serves for performing path-detection and path assignment for managing multipath contributions. In an exemplary context of a wireless communication system of the third generation (UMTS), the multipath detection involves detecting the presence of pilot symbols provided on a particular control channel, which is the common pilot channel CPICH. The pilot signals are commonly distributed in a network cell of the wireless communication system.

The multipath searcher holds an a-priory known pilot-symbol sequence, which it correlates to the received pilot-symbol signal. This process is performed for instance during an Idle mode of a RF communication device. The Idle mode is a state, in which the RF communication device is inactive for the purpose of saving power in absence of ongoing RF communication. In the Idle mode, the paging information channel PICH is monitored only at regular intervals defining a discontinuous reception (DRX) cycle. Multipath detection is performed each time the RF communication device becomes active in the DRX cycle.

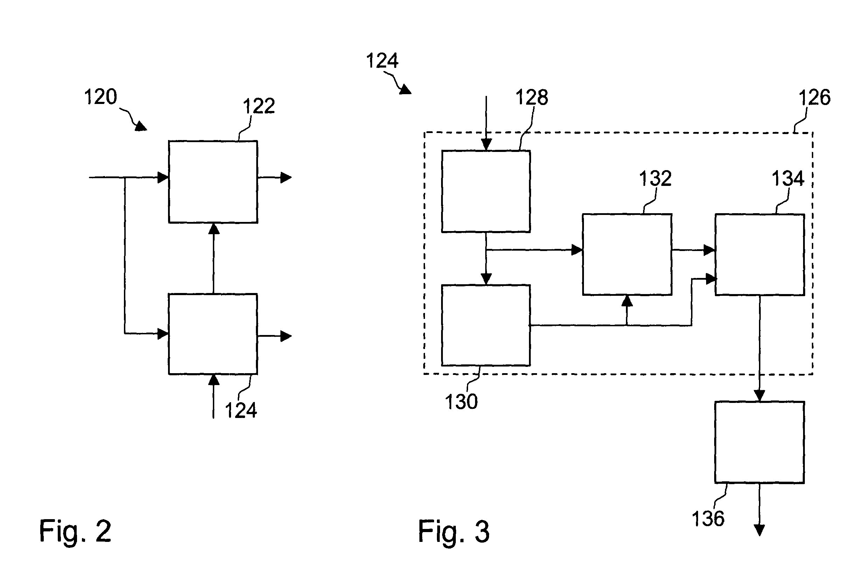

In the following Figs. 2 and 3, the multipath searcher 120 will be described in more detail.

Fig. 2 shows a schematic block diagram of a multipath searcher 120 of Fig. 1, according to an embodiment of the present invention. The multipath searcher 120 has a multipath-detector unit 122 and a control unit 124. The multipath-detector unit serves to perform multipath detection according to a multipath-detection algorithm, which as such is known in the art. Multipath detection algorithms involve the use of a number of pilot symbols comprised in a pilot-symbol signal received from the Rake-receiver structure. In the example of Fig. 1, the multipath-detector unit receives the pilot-symbol signal from the ADC unit 110.

Furthermore, multipath-detection involves the ascertaining of a correlation measure between the received pilot-symbol signal and an expected pilot-symbol signal. The expected pilot-symbol signal is stored in the multipath-detector unit, in a register or memory, which is not shown in Fig. 2. However, in contrast to known multipath detection algorithms, the multipath-detector unit 122 is configured to perform the multipath detection using a controllable number of pilot symbols. The number of pilot symbols to be used in the multipath detection is set by the control unit 124, which is connected with the multipath-detector unit. Thus, the multipath-detector unit is configured to perform a number of correlations that is set by the control unit 124.

The control unit 124 is configured to set the number of pilot symbols to be used by the multipath-detector unit in performing the multipath detection in dependence on a channel condition indicator, which is either provided to the control unit from an external source, or which is ascertained by the control unit. It is also possible to use a channel condition indicator, which is based on an external input of parameters indicative of the current channel condition, and to internally derive the channel-condition indicator in the control unit 124. Thus, a combination of external input and internal operation for ascertaining the channel-condition indicator forms one embodiment of the control unit 124. The channel-condition indicator is indicative of a current channel condition on a control channel used by the Rake receiver 100 for receiving the pilot-symbol signal. In the case of 3G communication technology, the control channel is the paging information channel PICH. However, there is no restriction to this particular channel. Any channel, the current condition of which is indicative of the current channel condition on the control channel used for receiving the pilot-symbol signal can be used for deriving the channel-condition indicator.

Channel-condition indicator is in the present embodiment derived from a channel parameter related to the control channel. Suitable channel parameters are for instance the Received Signal Code Power RSCP on the control channel, which serves for the transmission of the pilot symbols, i.e. the CPICH. As an alternative, the channel parameter can be a ratio between the detected signal strength and a detected noise strength on the control channel serving for the transmission of pilot symbols, i.e. the ratio E_{c}/Iₒ, or it can be a received-signal-strength indicator on the control channel serving for transmission of the pilot symbols. An arithmetic combination of two or more of these parameters may also be used for deriving the required information on the channel condition. The mentioned measures are available in a typical RF communication device, since they are part of standard requirements and used for various other procedures such as cell monitoring. Using the received signal code power RSCP has the particular advantage that its variations are much correlated with downlink channel propagation fading.

Fig. 3 shows the control unit 124 in more detail. The control unit 124 comprises a static/dynamic estimator 126, which herein is also referred to as a channel-estimator unit. The static/dynamic estimator 126 has a channel-parameter processing unit 128, a memory 130, a variance-calculation unit 132, and a static/dynamic-decision unit 134. The output of the static/dynamic decision unit 134 is fed to a control-signal generator 136, the output of which is forwarded to the multipath-detection unit 122 of Fig. 2.

The channel-parameter processing unit 128 receives at its input a current value of at least one of the mentioned channel parameters, which are evaluated in the static/dynamic-estimator unit 126. To this end, the received values are buffered in a suitable memory 130 and fed in parallel to the variance-calculation unit 132. Based on the current and previous channel-parameter values, a current variance value is calculated. A certain suitable window of past channel-parameter values is provided for this purpose from the memory 130. The past channel-parameter values serve for calculating a mean value of the channel-parameter values within the considered time window. The variance of the sample of the channel-parameter values under consideration is calculated. Generally, the variance is the mean squared deviation, i.e. an average of the square of the difference of each channel-parameter value from the mean channel-parameter value. Various well-known implementations for calculating the variance are well known in the art.

The current variance value 132 is then used by the static/dynamic decision unit 134 to detect a presence of either static or dynamic channel conditions. To this end, the determined variance is for instance compared with a threshold variance value, above which the control channel is considered to by dynamic and below which the channel is considered to be static. In another embodiment, two different threshold values are used. For instance and upper threshold value of the variance, above which a channel is considered to be dynamic, and a lower threshold value of the variance below which the channel is considered to be static, can be employed. By employing two different threshold values, a hysteresis of the static/dynamic decision can be implemented. This implies that there is an intermediate or "overlap" range between the lower and upper threshold values. In this range, the decision depends on the history of the variance. If the variance enters the "overlap" range from above the upper threshold, the channel will still be considered to be dynamic. If, however, the variance enters the intermediate range from below the lower threshold value, the channel will be considered to be static until the upper threshold value is past.

This hysteresis approach is currently preferred. The lower and upper variance threshold can be easily adjusted by simulation. Depending on the requirements of a particular network operator and on a required margin with respect to channel requirements (in 3G systems the PICH-PCH requirements) the adjustment can be made in favor of either power savings or performance robustness. The channel requirements are of course also related to the general receiver link-level capabilities.

The static/dynamic decision unit 134 provides a channel-condition indicator signal, which indicates whether the control channel is currently in a static or dynamic condition. Based on the channel-condition indicator, a multipath-detection duration, i.e. a number of pilot symbols to be used for the multipath detection is derived and set in the control signal generator 136. Depending on the result, the control-signal generator 136 provides at its output a control signal for setting a larger number of pilot symbols if the control channel has been estimated to be dynamic, and a lower number of pilot symbols, if the downlink control channel has been estimated as being static.

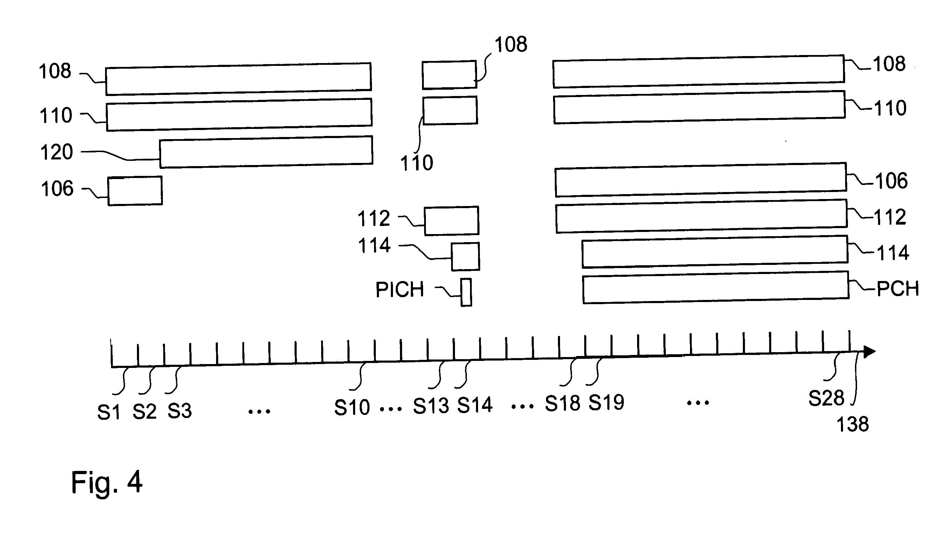

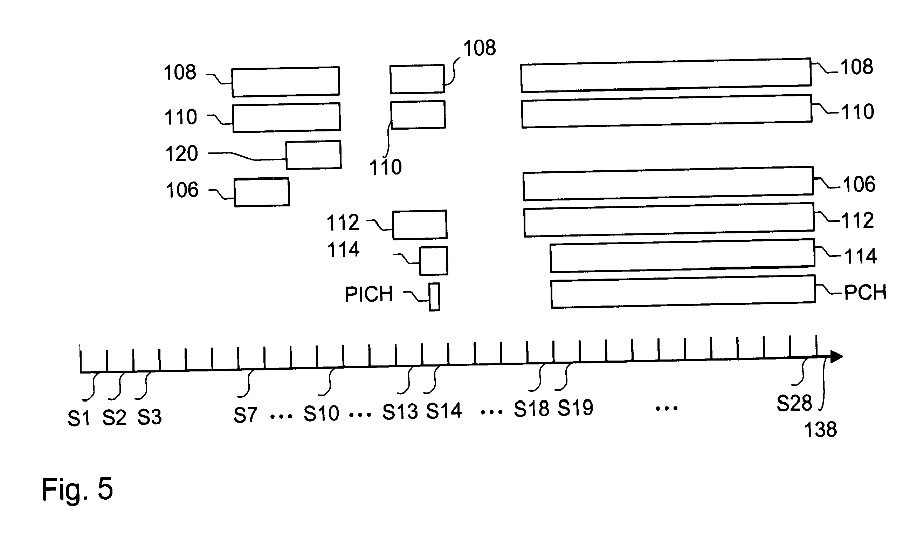

Figs. 4 and 5 show timing diagrams of different units of the Rake receiver of Fig. 1 during a paging procedure under dynamic and static channel conditions, respectively. The timing diagram shows as an exemplary situation a discontinuous reception (DRX) situation, like in an Idle mode of a 3G RF communication device. A time axis 138 represents a time interval, which is divided into 28 slots S1 to S28. Phases of operation of different units of the Rake receiver 100 are represented by blocks drawn above the time axis 138 and labeled with the reference labeles used in Fig. 1 for the respective units. As can be seen, the RF unit 108 and the AGC unit 106, as well as the ADC unit 110 are active starting from timeslot S1. The AGC unit 106 stops operation after time slot S2. With timeslot S3 the multipath search 120 starts operation. The operation of the multipath searcher, the ADC unit 110 and of the RF unit 108 stops at timeslot S10. This first phase of operation of these units its devoted to the multipath search at the beginning of an active phase during a DRX cycle. As will be come apparent from the description of Fig. 5, the present case corresponds to the case of detecting dynamic channel conditions, which implies the use of a larger number of pilot symbols in multipath detection. After this initial multipath search procedure, the paging information channel PICH is monitored between timeslots S13 and S14. In the case illustrated in Figs. 4 and 5, a positive result is obtained implying that paging information is present for the RF communication device on a paging channel PCH. The duration of scanning the paging information channel PICH and the paging channel PCH is indicated by respective blocks PICH and PCH. The scanning of the paging channel lasts from timeslot S19 at least to timeslot S28. The operation of the RF unit 108, the ADC unit 110, the AGC unit 106 and of the of the master Rake unit 112 starts one slot earlier with timeslot S18. Only the slave Rake unit 114 also starts operation in this context with timeslot S19.

In comparison, for the static channel condition, Fig. 5 illustrates that a much shorter multipath search phase is required. A previous detection of static channel conditions has prompted control signals that set the timing of the RF unit 108, the ADC unit 110, the multipath searcher 120, and of the AGC unit 106 to a shorter duration for the multipath search phase. It starts with timeslot S7 instead of timeslot S1 for dynamic conditions. As in the case of the dynamic conditions shown in Fig. 4, the multipath search period is finished at the end of timeslot S10, followed by operation phases, which are identical to those shown in Fig. 4. This demonstrates that the operation of several units of the Rake receiver 100 is considerably shorter under static channel conditions than under dynamic channel conditions. Therefore, the power required for the operation of the different units during the multipath search process is reduced in comparison with prior-art devices, which use a constant number of pilot symbols for the multipath search process under all channel conditions, static or dynamic.

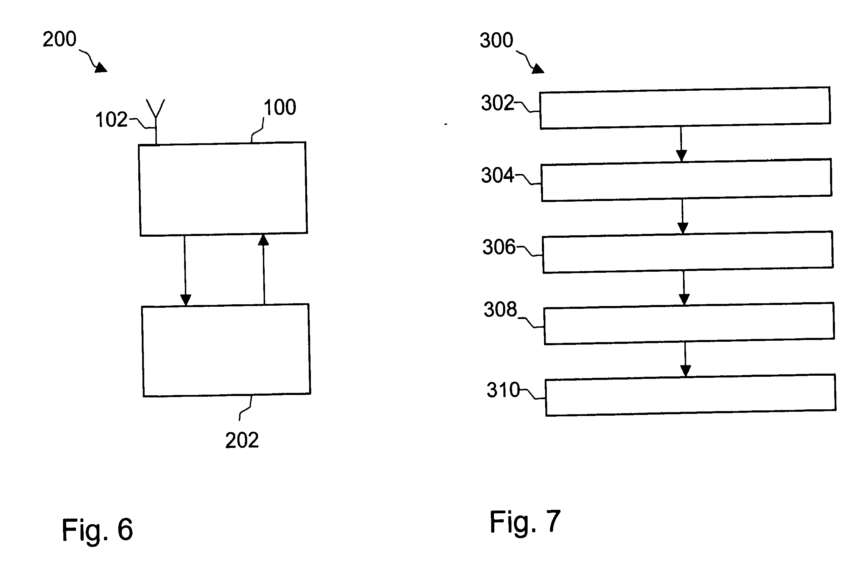

Fig. 6 is a schematic simplified block diagram of RF communication device, such as for instance a module for wireless communication, a PC card for wireless communication, a mobile telephone, a computer capable of RF communication, or any other known RF communication device. Most of the functional blocks that are provided in the RF communication device 200 are omitted in the graphical representation of Fig. 6 for reasons of graphical simplicity. Only a Rake receiver 100 and a timing-control unit 202 are shown. The timing-control unit 202 serves for controlling the timing of the operation of the different units of the Rake receiver 100. To this end, the timing-control unit 202 receives input from the control unit 124 of the multipath searcher 120 of Figs. 1 to 3 regarding the number pilot symbols to be used in the multipath detection. From this information, the timing-control unit derives timing-control information for controlling the operational phases of the different units of the Rake receiver unit 100, as illustrated in Figs. 4 and 5. The timing-control unit 202 may in an alternative embodiment be integrated into the Rake receiver 100. However, it is preferred to incorporated into the general timing-control unit of the receiver of the RF communication device 200.

Fig. 7 shows an embodiment of a method 300 to be used in the context of multipath search. The method 300 starts with a step 302, in which a current channel condition on a control channel used by the Rake receiver, such as Rake receiver 100, for receiving a pilot-symbol signal is detected. As explained in the context of the previous figures, the determination of the channel condition may involve deriving a channel-condition indicator providing information on whether the control channel is currently in a static or dynamic condition.

With step 304, a number of pilot symbols to be used in performing a multipath-detection is set in dependence on the ascertained channel condition.

Subsequently, a timing advance is set with respect to an expected reception time of a paging indicator signal on a paging information channel (PICH). The timing advance controls the activation of different units of a Rake receiver, as explained in the context of Figs. 4 and 5. The respective timing advance determined has an amount corresponding to the currently set number of pilot symbols to be used in the multipath detection. If the channel is static, a shorter multipath detection phase can be used, as controlled by an appropriate timing-advance setting.

Subsequently, the multipath detection is performed in step 308, involving the calculation of a correlation measure between a section of the pilot-symbol signal comprising the set number of pilot symbols and an expected pilot-symbol signal comprising the set number of pilot symbols.

Finally, in a step 310, the multipath detection is finalized using the ascertained correlation measure.

The method can be summarized in table form as follows:
- Step 302: Ascertain channel condition on CPICH
- Step 304: Set number of pilot symbols to be used for multipath detection
- Step 306: Set timing advance
- Step 308: Calculate correlation measure for set number of pilot symbols
- Step 310: Finalize multipath detection

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measured cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A multipath searcher (120), which is connectable to an external Rake receiver (100) and comprises
- a multipath-detector unit (122), which is configured to perform multipath detection using a number of pilot symbols comprised in a pilot-symbol signal provided by the external Rake receiver, and to ascertain a correlation measure between the received pilot-symbol signal and an expected pilot-symbol signal comprising the number of pilot symbols; and
- a control unit (124), which is connected with the multipath-detector unit, and which is configured to set the number of pilot symbols to be used by the multipath-detector unit in performing the multipath-detection in dependence on a current channel condition on a control channel used by the Rake receiver for receiving the pilot-symbol signal.

2. The multipath-searcher of claim 1, wherein the control unit (124) is configured to set the numer of pilot symbols in dependence on a degree of signal fading on the control channel (CPICH), through which the pilot symbols are transmitted to the external Rake receiver.

3. The multipath searcher of claim 2, wherein the control unit (124) is configured
- to distinguish between at least two different channel conditions;
- to set a first number of pilot symbols to be used in performing the multipath detection under a first channel condition with a stronger presence of signal fading on the control channel, and
- to set a second number of pilot symbols, which second number is smaller in comparison with the first number, the second number of pilot symbols to be used in performing the multipath detection under a second channel condition with a weaker presence of signal fading on the control channel in comparison with the first channel condition.

4. The multipath searcher of claim 1, further comprising
- a channel-estimator unit (126), which is connectable to the external Rake receiver and is configured
- to ascertain at least one current value of at least one channel parameter indicative of the channel condition of the control channel,
- to detect, using at least one predefined criterion related to the at least one channel parameter, a presence of one of at least two distinguishable channel conditions; and
- to generate and provide to the control unit a channel-condition indicator carrying information about which of the at least two distinguishable channel condition has been detected.

5. The multipath searcher of claim 4, wherein the channel-estimator unit (126) is configured
- to repeatedly ascertain the at least one current value of the at least one channel parameter;
- to ascertain as a measure indicative of signal fading on the control channel a variance of the channel-parameter values of the at least one channel parameter; and
- to apply a predefined criterion on the variance for distinguishing between at the least two channel conditions, which are distinguishable by a measure indicative of signal fading on the control channel.

6. The multipath-searcher of claim 4 or 5, wherein the channel-estimator unit (126) is configured
- to use a distinction between at two value ranges of the channel parameter, the value ranges having a common overlap interval between an upper and a lower threshold value;
- to generate a first channel-condition indicator signal, if the variance is in the overlap interval and has last entered the overlap range from above the upper threshold value; and
- to generate a second channel-condition indicator signal, if the variance is in the overlap range and has last entered the overlap range from below the lower threshold value.

7. The multipath-searcher of claim 4, wherein the at least one channel parameter is from the group consisting of
- a Received Signal Code Power on a control channel, which serves for a transmission of pilot symbols,
- a ratio between a detected signal strength and a detected noise strength on the control channel serving for a transmission of pilot symbols, and
- a Received-Signal-Strength Indicator on the control channel serving for a transmission of pilot symbols.

8. A Rake receiver (100), comprising a multipath-searcher (120) according to one of claims 1 to 7.

9. A modem (200), comprising a Rake receiver with a multi-path searcher according to one of claims 1 to 7.

10. A RF communication device (200), comprising a Rake receiver with a multipath-searcher according to one of claims 1 to 7.

11. The RF communication (200) device of claim 8, which is configured to exchange control signals with an external base transceiver station of a cellular radio access network according to communication protocols of a 3G cellular-telecommunication standard.

12. The RF communication device (200) of claim 8, further comprising a timing-control unit (202), which is connected with the control unit of the multipath searcher, and which is configured to
- activate the Rake receiver (100) at a controllable timing advance (S1; S7) with respect to an expected reception time (S14) of a paging indicator signal (PICH); and to
- set the timing advance (S1; S7) in correspondence to the number of pilot symbols to be used by the multipath-detector unit (122) in the multipath detection.

13. A method (300), comprising:
- ascertaining (302) a current channel condition on a control channel (CPICH) used for receiving a pilot-symbol signal,
- setting (304) a number of pilot symbols to be used in performing a multipath-detection in dependence on the ascertained channel condition;
- ascertaining (308) a correlation measure between a section of the pilot-symbol signal comprising the set number of pilot-symbols and an expected pilot-symbol signal comprising the set number of pilot symbols; and
- performing (310) multipath detection using the ascertained correlation measure.

14. The method of claim 13, further comprising:
- setting (306) a timing advance with respect to an expected reception time of a paging indicator signal for activating a Rake receiver, the timing advance having an amount corresponding to the currently set number of pilot symbols to be used in the multipath-detection; and
- activating a Rake receiver at the set timing advance.

15. A computer program product, comprising executable code, which after installation in a program memory of a processor controls the processor to perform a method according to claim 13 or 14.
